# EUROPEAN PATENT APPLICATION

(11) **EP 4 730 672 A1**
(43) Date of publication of application: **22.04.2026**
(21) Application number: 25208370.4
(22) Date of filing: 13.10.2025
(51) Int. Cl.: H04B 10/071, H04B 10/073, G02B 6/26

(54) **METHOD FOR DETERMINING A DELAY IN A FIBER BASED NETWORK, AND REFLECTING UNIT**

(30) Priority: 17.10.2024 EP 24207297
(71) Applicant: Adtran Networks SE, 98617 Meiningen (DE)
(72) Inventor: Rapp, Lutz, 98617 Meiningen (DE); Jansen, Sander, 82110 Germering (DE); Meyer, Christophe, 98617 Meiningen (DE)
(74) Representative: Bratovic, Nino Maria

(57) **Abstract**

The invention provides a method for determining a delay between a start port (121-i) at a star point (SP) of a network (100) with a star topology and an end port (199-i) of one of the branches (101-i) of the network (100), the method comprising at least the steps of:
connecting (S10) a two-port bidirectional partially reflecting unit, TPBPRU (200; 300; 400), with a first port (201; 301; 401) to said branch (101-i) facing the direction of the start port (121-i), wherein the TPBPRU (200; 400; 500), is configured to partially reflect signals (CS1) entering it from both of its two ports (201, 209; 301, 309; 401, 409) with the same delay;
connecting (S20) a calibrating delay measurement device (150) with a first calibration fiber (151) to a second port (209; 309; 409) of the TPBPRU (200);
generating (S30) a first calibration signal (CS1) and inserting it into the first calibration fiber (151), while the start port (121-i) of the branch (101-i) is unconnected; and
determining (S40) a delay between a receiving of a first reflection (R1-1) of the first calibration signal (CS1) generated at the TPBPRU (200; 300; 400) and a receiving of a second reflection (R1-2) of the first calibration signal (CS1) generated at the unconnected start port (121-i).

## Description

### Technical field

The present invention relates to a method for monitoring a fiber based network with a star topology having a star point and branches connected thereto, to a method for determining a delay (i.e., a time delay) between a server port at a star point of a fiber based network with a star topology and an end port of one of the branches of the fiber based network, to a two-port bidirectional partially reflecting unit for a fiber based network, and to a fiber based network with a star topology having a star point and a plurality of branches. Improvements relate in particular to achieving and maintaining a uniform delay over all branches of a fiber based network with a star topology.

### Background

Fiber based networks offer reliable and fast solutions for the transmission and exchange of data. Since data is transmitted via light signals travelling within the fibers, the delays are typically small compared to other types of networks. In networks with a star topology, a central server forming the star point can be coupled to a plurality of branches of fiber transmission lines, so that signals emanating from the server can reach every participant, each situated at a respective end of each of the branches, with small delays and roughly at the same time.

However, in some applications, the need for the smallest possible delays is offset or even eclipsed by the need for having the same delay for every participant of the network. In such applications, having a smaller delay than other participants may result in a considerable advantage, for example in high-frequency trading, where the server at the star point provides financial data, e.g., real-time stock or commodity prices.

Known methods for determining a delay of a branch of a fiber based network with star topology before it is put to use typically employ commercial optical time domain reflectometers. However, challenges include changes of the network after the network is put to use, in particular unequal changes of the delays for different participants. Such changes may result from gradual drifts, e.g. deterioration of physical components, or even from purposeful manipulation. Another challenge is the theoretical possibility of falsifying a delay measurement to yield a higher delay with respect to other participants, in order to be given compensating remedies which could in reality then result in a lower delay compared to other participants.

### Summary

It is therefore one of the objects of the present invention to provide an improved method for monitoring a fiber based network, an improved method for determining a delay in a fiber based network, an improved fiber based network, and an improved reflecting unit for use in a fiber based network, wherein the improvement in particular relates to accurate delay measurements and/or techniques of equalizing (or: balancing) delays among end devices (or: participant devices) of the fiber based network.

This object is solved by the subject-matter of the independent claims.

According to a first aspect, a method for monitoring a fiber based network with a star topology having a star point (or: central node) and branches connected to the star point is provided, the method comprising at least steps of:
inserting a respective test signal into each of a plurality of the branches (preferably into all of the branches) of the network using a delay measurement device;
measuring a (time) delay between the respective inserting of the respective test signal and a receiving of a reflected signal for each of the plurality of branches, the reflected signal being generated, at each branch of the plurality of branches, at a reflecting unit arranged at a respective end of said branch in parallel to or in front of an end port for connecting an end device to the fiber based network.

All signals described herein, in particular those for data transfer, may specifically be light signals. The fibers may be glass fibers and/or plastic fibers.

The term "star point" as used across this document refers to a central point of information in a network topology that is a star topology. At this point, signals transmitting information to the end points of the different branches are launched into the network, and/or collected and aggregated form the different branches. In some embodiments, the start point may be formed by a server providing information to the end points of the branches connected to the star point via an optical splitter. In conclusion, the term "star point" is used herein mainly not as a physical point but as a description of a point in a network topology that is a star topology.

The delay measurement device may be a central delay measurement device for all of the branches, or there may be a plurality of delay measurement devices provided, for example one delay measurement device for each of the branches or a plurality of measurement devices, wherein each of them is configured to measure the delay for a set of branches.

Being connected in parallel means in particular that, as opposed to being connected in series where a signal would first have to traverse the reflecting unit and then arrive at the end port, or vice versa, a signal will be split up at a coupling point, and two portions of the signal will then travel independently, one from the coupling point to a reflective mirror of the reflecting unit, and one from the coupling point to the end port.

In some advantageous embodiments, refinements, or variants of embodiments, the method further comprises adjusting a delay of at least one of the plurality of branches, in particular to equalize the delay of all of the plurality of branches between the star point, in particular a server acting as the star point, and the respective end port. In this way it may be ensured that all end devices receive pieces of information transmitted by the server (i.e., emanating from the star point) at essentially or exactly the same time and/or that signals entered by the end devices reach the star point at essentially or exactly the same time.

In some advantageous embodiments, refinements, or variants of embodiments, the test signals inserted into different branches have the same wavelength spectrum, or different wavelength spectra. Different wavelength spectra include partially overlapping spectra or completely disjunct wavelength spectra, the latter preferably with a frequency gap therebetween. Both variants offer specific advantages and disadvantages. Test signals having the same wavelength spectrum may originate from a common, longer primary signal, consecutive parts of which are sequentially inserted into different branches. One advantage of this variant is its relative simplicity, and the fact that the test signals in this case all propagate with the same group velocity diffusion.

In some advantageous embodiments, refinements, or variants of embodiments, the method thus comprises generating the test signals by the delay measurement device (here advantageously a central delay measurement device); and
sequential switching between various configurations of a signal switching device such that the test signals generated by the delay measurement device are inserted into different branches of the plurality of branches.

In some advantageous embodiments, refinements, or variants of embodiments, the method comprises generating and wavelength-tuning a primary signal by the delay measurement device; and directing the primary signal by wavelength-division (de-)multiplexing into the respective branches. In other words, test signals with different wavelengths may originate from a primary signal, being sequentially wavelength-tuned and split up by one or more wavelength-selective couplers into packet with different wavelengths for respective insertions into the branches. In the delay measurement results, differences caused by different group velocity diffusion may be compensated for.

In some advantageous embodiments, refinements, or variants of embodiments, the method comprises generating simultaneous test signals at different wavelengths that are directed by wavelength-division (de-)multiplexing into the respective branches. Reflected signals of the different signals are received sequentially by a wavelength tunable single receiver or in parallel by several receivers configured to receive signals at different wavelengths or in different wavelength ranges.

In both cases, preferably wavelengths of the test signals are disjunct (i.e., do not overlap with), at least essentially, from wavelengths of the data signals exchanged between the star point and the end devices. In that case, the reflecting units may comprise wavelength filters configured to let only the respective test signal pass, so that the signals inserted at the star point (i.e., regular data signals during operation of the fiber based network) are not reflected by the reflecting units.

In some advantageous embodiments, refinements, or variants of embodiments, the test signals are inserted in addition to data signals transmitted between a server as the star point of the fiber based network and one or more end devices connected to the respective branches. In other words, the measuring of the delays by way of the test signals and their reflections does not have to be conducted during times in which the fiber based network is disused (for example with the explicit purpose of allowing the measuring), but it may be conducted during normal use of the fiber based network, even when signals are currently being transmitted between the star point and end devices.

The test signals may in particular be transmitted regularly or even continuously, for example to monitor the delays to determine any unexpected changes in a delay. Such an unexpected change may indicate a physical fault or a potentially malign manipulation of the delay measurements or of the fiber based network itself. In other variants, regular intervals may be defined in which no data signals are transmitted and in which the measurements are conducted, or already scheduled maintenance intervals may be used for this purpose.

In some advantageous embodiments, refinements, or variants of embodiments, the fiber based network comprises in addition a reference branch with a reference fiber with known properties, wherein the reference fiber is preferably not connected to any end device. It may be arranged in a dedicated reference branch connected to the star point. A respective test signal (or: reference test signal) may also be inserted into the reference fiber, and a respective reflected signal (reflected at a reflecting unit at the end of the reference fiber and of the reference branch) may be used to measure a delay of the reference fiber. The measured delay of the reference fiber (or: reference delay) may then be used to compensate, in particular automatically, for environmental effects on the fiber based network (in particular on the delay measurements in the fiber based network), especially temperature-related effects.

The reference delay may be measured as often as the delay of the other branches, for example regularly with the same regularity, or continuously. The reference delay may also be measured more often, or less often.

The reference fiber is advantageously arranged within the same environment, in particular spatially close, to the other branches. For example, all branches including the reference branch with the reference fiber may be arranged within the same building or facility.

According to a second aspect, the invention further provides a method for determining a delay between a start port at a star point of a fiber based network with a star topology (as a first location) and an end port of one of the branches of the fiber based network (as a second location), wherein said branch comprises a start port for connection to the star point and an end port for connection to an end device. The method comprises at least the steps of:
connecting a two-port bidirectional partially reflecting unit with a first of its two ports to said branch facing the direction of the start port of said branch, wherein the two-port bidirectional partially reflecting unit is configured to partially reflect signals entering it from both of its two ports with the same delay;
connecting a calibrating delay measurement device with a calibration fiber to a second of the two ports of the two-port bidirectional partially reflecting unit;
generating a first calibration signal and inserting it into the calibration fiber, by the calibrating delay measurement device, while the start port of the branch is unconnected or connected to a reflective device with negligible delay or known delay from the start port to the location of reflection of the reflective device;
determining a delay between a receiving of a first reflection of the first calibration signal, generated at the two-port bidirectional partially reflecting unit, and a receiving of a second reflection of the first calibration signal, generated at the unconnected start port or the reflective device, respectively. Such a reflective device may be provided, for example, using a Fiber Bragg Grating and a method of inscribing a Fiber Bragg Grating as taught herein.

The method according to the second aspect may also be part of some embodiments of the method according to the first aspect of the present invention, in particular as part of a set-up process for the fiber based network which is being monitored using the method according to the first aspect.

Connecting the first port with a branch facing the direction of the start port of said branch may be understood to mean that a signal leaving the two-port bidirectional partially reflecting unit, TPBPRU, via its first port would then travel towards the start port of said branch. As an advantageous example, the first port may be connected to the end port of said branch.

In variants where the star point is occupied, or implemented, by a server, each start port may also be designated as "server port". At the start port (or: server port), a server functioning as the star point may be connected.

Partially reflecting is used here in the usual sense, in that a portion of the signal is reflected, and another portion of the signal is transmitted. Ideally, the ratio between the two portions is between 1:1 and 1:20 in either direction.

Determining the delay may comprise, or consist of, measuring the delay directly, or calculating it by first measuring the two (or more) other delays, and then performing arithmetic operations on the measured other delays.

Here and in the following, for some (especially longer) terms abbreviations (such as "TPBPRU" for "two-port bidirectional partially reflecting unit") are used. Usually, the full terms will be used, followed by the corresponding abbreviations. In some cases, to improve legibility, only the abbreviation will be used, whereas in other cases only the term itself will be used. In all cases, the term itself and the corresponding abbreviation shall be understood to be equivalent.

In some advantageous embodiments, refinements, or variants of embodiments, the method further comprises steps of:
connecting the calibrating delay measurement device at an insertion point of said branch;
generating a second calibration signal and inserting it into the branch at the insertion point via a second calibration fiber;
measuring a delay between the inserting of the second calibration signal and a receiving of its reflection at the two-port bi-directional partially reflecting unit; and
determining a time difference between delays between the start port and the insertion point on one hand, and the calibrating delay measurement device and the insertion point on the other hand. The second calibration fiber may be equal to, or identical with, the first calibration fiber, or different from it, for example different in length only.

In some advantageous embodiments, refinements, or variants of embodiments, the method further comprises the steps of: coupling a reflecting unit to the branch with a connection to the fiber of the branch at a corresponding coupling point, while the end port of the branch is unconnected;
generating and inserting at least a third calibration signal, by the calibrating delay measurement device, into the branch at an insertion point; and
determining a time difference between the inserting of one of the at least one third calibration signal and a receiving of a corresponding reflection from the unconnected end port and the inserting of one of the at least one third calibration signal and a receiving of a corresponding reflection from the reflecting unit.

In some variants, there may be only a single (third) calibration signal, causing both reflections, for example by being partially coupled out at the coupling point of the reflecting unit. In other variants, there may be two calibration signals, i.e., a third and a fourth calibration signal, which are preferably different from one another, with the reflecting unit interacting differently with each of them.

In some advantageous embodiments, refinements, or variants of embodiments, the at least one third calibration signal includes, or consists of, a third calibration signal and a fourth calibration signal, and the third calibration signal consists of a first wavelength range configured such that the third calibration signal reaches the end port but is not coupled out at the coupling point. The method may further comprise:
generating and inserting the fourth calibration signal, by the calibrating delay measurement device, into the branch at the insertion point,
wherein the fourth calibration signal consists of a second wavelength range configured such that the fourth calibration signal is completely coupled out of the branch at the coupling point. Thus, the determining preferably comprises, or consists of, determining a time difference between the inserting of the third calibration signal and a receiving of its reflection signal from the unconnected end port, and the inserting of the fourth calibration signal and a receiving of its reflection signal from the reflecting unit.

According to a third aspect, the present invention provides a two-port bidirectional partially reflecting unit for a fiber based network, comprising:
a first end surface of a first (signal-transmitting) fiber and a second end surface of a second (signal-transmitting) fiber facing one another, wherein the first fiber and the second fiber are aligned along a common longitudinal direction in a volume in which the first end surface and the second end surface are arranged;
wherein the first end surface is arranged essentially in perpendicular to the longitudinal direction; and
wherein the second end surface is formed and arranged at an angle with respect to the first end surface, creating a wedge-form gap between the first end surface and the second end surface.

The first end surface and the second end surface of the first and second fiber, respectively, may be arranged within a housing, e.g. a longitudinal housing formed along the common longitudinal direction as well. Thus the housing may comprise or form the volume in which the first end surface and the second end surface are aligned along the common longitudinal direction. The wedge-form gap is arranged inside the volume as well.

Thus, the wedge-form gap (e.g., an air or vacuum gap) ensures that light signals entering at the first port are reflected at the inside of the first end surface because of the change in the refractive index occurring behind it. The angle α of the wedge-form gap is chosen such that (light) signals entering at the second port are not reflected at the inside of the second end surface on which they impinge at an angle of 90°-α. These signals then pass the wedge-form gap and are then reflected by the outside of the first surface, then passing again through the second surface (from outside to inside). In this way, signals entering the two-port bidirectional partially reflecting unit, TPBPRU, from both sides are in each case reflected at the same location, i.e., the location of the first surface.

In some advantageous embodiments, refinements, or variants of embodiments, the angle of the wedge-form gap is between 6° and 12°, in particular 8° to 10°.

According to a fourth aspect of the present invention, the invention provides a fiber based network with a star topology having a star point and a plurality of branches, comprising:
a delay measurement device;
a reflecting unit arranged at an end of each branch connected in parallel to or in front of an end port for connecting an end device to the fiber based network at said branch;
the delay measurement device being configured to:
   insert a respective test signal into each of a plurality of branches (preferably into all of the branches); and
   measure a delay between the inserting of the respective test signal and a receiving of a respective reflected signal for each of the branches, the respective reflective signal being generated, at each branch of the plurality of branches, by the respective reflecting unit.

In some advantageous embodiments, refinements, or variants of embodiments, each reflecting unit is arranged close to an end port of the respective branch, and is arranged and configured such that a delay between a coupling point of the reflecting unit (at which a signal travelling along the branch is partially coupled out) and a reflective mirror of the reflecting unit is equal to a delay between the coupling point and the end port, in particular for the respective test signal. The reflective mirror may be any element configured to return an optical signal reaching it, such as a mirroring Fiber Bragg Grating, an optical mirror, and/or the like.

Being arranged close to the end port should be understood in particular to mean that it is arranged closer to the end port than to the start port of the branch.

In some advantageous embodiments, refinements, or variants of embodiments, the fiber based network further comprises a time delay modification module configured to modify the delay between the star point and at least one (or multiple, or each) of the end ports based at least on the respective delay measured by the delay measurement device.

In some advantageous embodiments, refinements, or variants of embodiments, the fiber based network further comprises a central server connected to the fiber based network as its star point. The time delay modification module may be implemented as software on the server configured to adapt, and in particular equalize (or: balance), the delays between the server and each of the end ports.

The computing device may be realized as any device, or any means, for computing, in particular for executing a software, an app, or an algorithm. For example, the computing device may comprise at least one processing unit such as at least one central processing unit, CPU, and/or at least one graphics processing unit, GPU, and/or at least one field-programmable gate array, FPGA, and/or at least one application-specific integrated circuit, ASIC and/or any combination of the foregoing. The computing device may further comprise a working memory operatively connected to the at least one processing unit and/or a non-transitory memory operatively connected to the at least one processing unit and/or the working memory. The computing device may be implemented partially and/or completely in a local apparatus and/or partially and/or completely in a remote system such as by a cloud computing platform.

In some advantageous embodiments, refinements, or variants of embodiments, the time delay modification module is partially or completely implemented as hardware, in particular as an optical domain delay element and/or as an electrical domain delay element. For example, the time delay modification module may be realized by a physical time delay modification unit arranged within each of the branches in the optical domain, or between a computing unit of the server and electrical-to-optical couplers in the electrical domain.

Further possible embodiments, refinements, or variants of embodiments, will be described in the following, in particular with regard to the accompanying drawings.

### Brief description of the drawings

For a more complete understanding of the present invention and advantages thereof, reference is now made to the following description taking in conjunction with the accompanying drawings. The invention is explained in more detail below using exemplary embodiments, which are specified in the schematic figures of the drawings, in which:
- Fig. 1: shows a schematic depiction of a fiber based network according to an embodiment of the present invention;
- Fig. 2: shows a schematic depiction of signal paths in the fiber based network of Fig. 1;
- Fig. 3: shows a possible implementation of a central delay measurement device of the network of Fig. 1;
- Fig. 4: shows another possible implementation of a central delay measurement device of the network of Fig. 1;
- Fig. 5: illustrates an advantageous variant of the fiber based network of Fig. 1;
- Fig. 6: illustrates another advantageous variant of the fiber based network of Fig. 1 or of Fig. 5;
- Fig. 7: shows a schematic flow diagram illustrating a method according to an embodiment of the present invention;
- Fig. 8: shows a schematic flow diagram illustrating a method according to another embodiment of the present invention;
- Fig. 9: shows part of a fiber based network for illustrating the method of Fig. 8;
- Fig. 10: illustrates intermediate states and signal pathways for the illustration of the method of Fig. 8;
- Fig. 11: shows part of a fiber based network for further illustrating the method of Fig. 8;
- Fig. 12: shows a schematic graph, still for illustrating the method of Fig. 8;
- Fig. 13: shows a two-port bidirectional partially reflecting unit according to another embodiment of the invention;
- Fig. 14: illustrates another variant for implementing a two-port bidirectional partially reflecting unit for the use in the method of Fig. 8;
- Fig. 15: illustrates the requirement for equal delay for the setups shown in Fig. 13 and Fig. 14;
- Fig. 16: illustrates yet another variant for implementing a two-port bidirectional partially reflecting unit for the use in the method of Fig. 8; and
- Fig. 17: illustrates another method for producing a two-port bidirectional partially reflecting unit according to an embodiment.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown in scale.

In the drawings, same, functionally equivalent and identical operating elements, features and components are provided with same reference signs in each case, unless stated otherwise.

Method steps are designated with numbered steps. The steps may be performed in a temporal order according to their numbering, or in a different order, although performing according to their numbering may be a preferred implementation. Two or more of the steps may be performed partially overlapping or simultaneously. Steps may be performed once or multiple times, for example regularly or iteratively.

### Description of embodiments

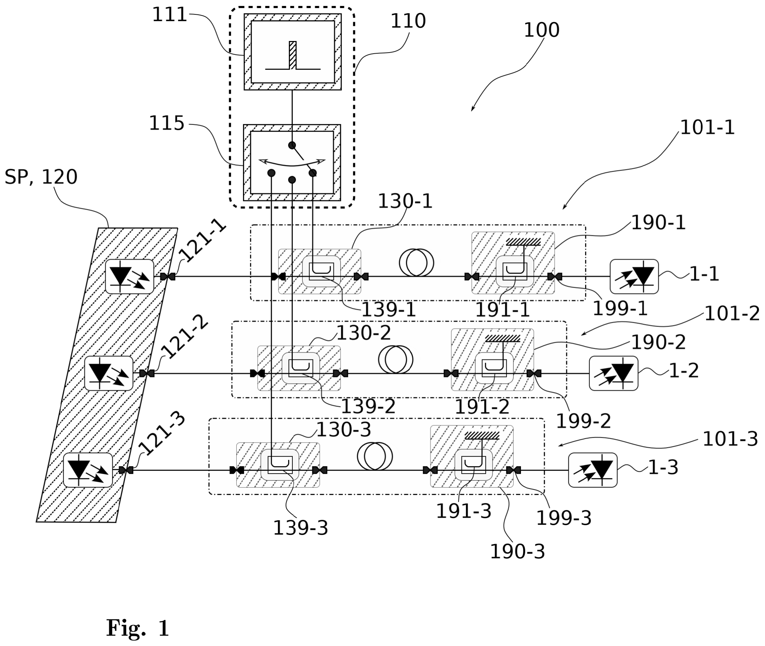

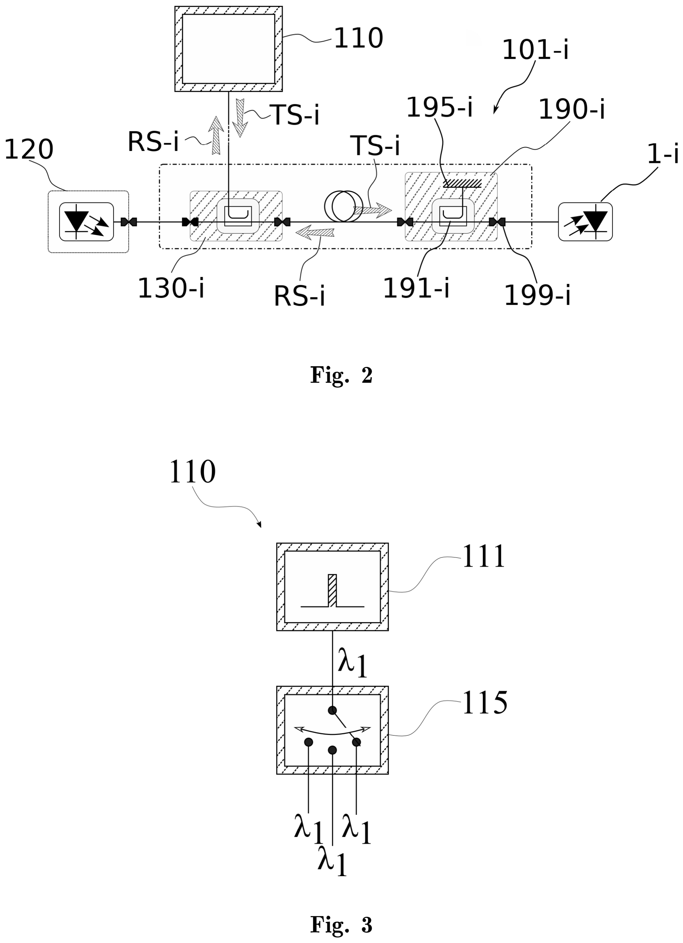

Fig. 1 shows a schematic depiction of a fiber based network 100 according to an embodiment of the present invention, i.e., a fiber based network 100 with a star topology having a star point SP, here occupied (or: provided) by a server 120, and a plurality of branches 101-1, 101-2, 101-3. Each branch 101-1, 101-2, 101-3 uses a fiber for transmitting signals from or to the star point SP. Fig. 1 will also be used to describe, together with Fig. 2, a method for monitoring a fiber based network 100 with a star topology according to another embodiment of the present invention.

In order to keep the notation succinct, in the following reference signs referring to any branch 101-1, 101-2, 101-3 or any element of any of the branches 101-1, 101-2, 101-3, or referring to all of the branches 101-1, 101-2, 101-3 or any element of all of the branches 101-1, 101-2, 101-3 will be abbreviated with "x-i", wherein "x" stands for the reference sign of the branch or of the element common to all branches, respectively. Thus, for example, "101-i" may designate any or all of the branches 101-1, 101-2, 101-3. Similarly, reference signs being introduced that end in "-i" should be understood to refer to the same element in any of the branches, wherein "-i" may be replaced by "-1", "-2", or "-3" in each case.

Moreover, herein examples with three branches 101-i with i=1,2,3 are used, whereas it should be understood that this is only a convenient choice, and in any implementation of any embodiment of the present invention there may be one, two, three, or any higher number of branches 101-i (i.e., 1≤i), and the introduction of reference signs of the type "x-i" should be interpreted accordingly.

Squared brackets are used for indicating delays, wherein the two letters between an opening and a corresponding closing bracket indicate start and end location to which the delay applies.

In Fig. 1, the server 120 could be a data source of real-time financial data, for example. Each branch 101-i is connected at one end, via a respective start port 121-i, to the server 120, in particular for receiving data from the server 120. On its other end, each branch 101-i is connected, via a respective end port 199-i, to a respective end device 1-i. In some variants, the definition of the fiber based network 100 according to the present invention may also comprise one or more of the end devices 1-i.

For example, each end device 1-i may be a workstation of a high-frequency trader of financial assets, so that it is highly desirable that each end device 1-i should have the same (time) delay for signals transmitted between the server 120 and the end device 1-i.

To this end, the fiber based network 100 comprises a respective reflecting unit 190-i arranged and connected, at respective coupling points 191-i, in parallel to each end port 199-i to the network fiber of each branch 101-i. The reflecting units 190-i could also be positioned in front of the respective end port 199-i.

The fiber based network 100 further comprises a delay measurement device, here implemented as a central delay measurement device 110 configured to insert a respective test signal into each of the branches, via a respective coupling unit 130-i. The central delay measurement device 110 may comprise an optical time domain reflectometer, OTDR 111, and a signal switching device 115 configured to switch at least one signal between the OTDR 111 and the coupling units 130-i with their coupling points 139-i as will be described in more detail hereafter, in particular with respect to following figures.

Although the central delay measurement device 110 is here shown and described as "central" as one implementation example, it should be understood that the invention may equally be implemented with two or more distributed delay measurement device, for example with one delay measurement device being provided for each branch 101-i.

Fig. 2 shows a schematic depiction of signal paths in the fiber based network 100, for the sake of simplicity for a single branch 101-i.

The central delay measurement device 110 is further configured to measure a delay between the inserting of the respective test signal TS-i and a receiving of a respective reflected signal RS-i for each of the branches 101-i, the respective reflective signal being generated, at each branch 101-i, by the respective reflecting unit 190-i. In some variants, each reflected signal RS-i may comprise, or consist of, a reflection of the respective test signal TS-i.

Each reflecting unit 190-i is arranged close to the end port 199-i of the respective branch 101-i, with signals travelling from the star point SP towards the end port 199-i being partially coupled out ("cloned") at a corresponding coupling point 191-i. Each reflecting unit 190-i is arranged and configured such that a delay between the coupling point 191-i and a reflective mirror 195-i (or similar element) of the reflecting unit 190-i is equal, or essentially equal, to a delay between the coupling point 191-i and the end port 199-i, in particular for the respective test signal TS-i. In this way, a delay measured, from any location between the central delay measurement device 110 and the coupling point 191-i to the reflective mirror 195-i, is equal to the delay from the same location to the end device 1-i.

Thus, by measuring the delays to the reflective mirror 195-i of each of the reflective units 190-i, the delay to each of the end device 1-i is knowable. Differences between the branches 101-i regarding the delay between the start ports 121-i and the end ports 199-i can then be easily determined. The simplest case is when the delays between the respective start port 121-i and a respective insertion point 139-i, at which the respective coupling unit 130-i feeds the testing signal TS-i into (and extracts the reflected signal RS-i from) the branch 101-i, are individually known, or all equal. The start ports 121-i are here all considered to be equivalent to the star point SP, i.e., as having no (or no unknown) delay differences between them.

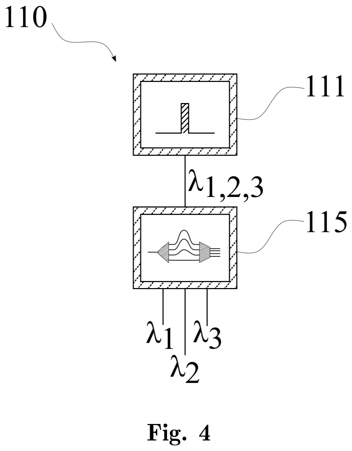

Fig. 3 and Fig. 4 show two of several possible variants for implementing the central delay measurement device 110.

Fig. 3 shows an implementation of the central delay measurement device 110 wherein the optical time domain reflectometer, OTDR 111, is coupled to a signal switching device 115 which sends portions of a primary signal generated by the OTDR 111 in different (in particular consecutive) time slots to different coupling units 130-i to be coupled by them into the different branches 101-i of the plurality of branches 101-i as the respective test signals TS-i. Thus, all of the test signals TS-i may have the same wavelength λ₁, and the branches 101-i may receive the test signals TS-i sequentially. Fig. 3 illustrates that this kind of signal switching device 115 can be implemented by switching the ODTR 111 sequentially to different ports.

Fig. 4 shows another implementation of the central delay measurement device 110, wherein the optical time domain reflectometer, OTDR 111, generates a primary signal with a tunable wavelength spectrum λ_{1,2,3}. This OTDR 111 is coupled to a signal switching device 115 which sends signal portions with different wavelengths λ₁, λ₂, λ₃ (or different wavelength ranges) sequentially to different coupling units 130-i to be coupled by them into the respective branch 101-i as the respective test signals TS-i. Thus, the signal switching device 115 employed in this variant is a wavelength-selective coupler such as a band splitter or a wavelength-division multiplexer. The test signals TS-i accordingly have different wavelengths λ₁, λ₂, λ₃ or different wavelength ranges which preferably do not overlap, and more preferably are separated from one another by wavelength gaps.

Advantageously, the wavelength(s) selected for the test signals TS-i are disjunct from wavelengths or wavelength spectra used for the actual data transmission when the fiber based network 100 is in use. Each reflecting unit 190-i may be provided with a matching wavelength filter configured to allow specifically and only the wavelength(s) of the respective test signal TS-i to pass, so that there is no reflection of the data signal(s) transmitted by the server 120 at the reflecting unit 190-i, for example.

Using test signals TS-i of different wavelengths λ₁, λ₂, λ₃ or different wavelength ranges for measuring the delays suffers from group-velocity dispersion (GVD) in that signals at different wavelengths propagate at different velocity. This effect can be taken into account when comparing the different delays determined for the different branches 101-i and/or when compensating for them.

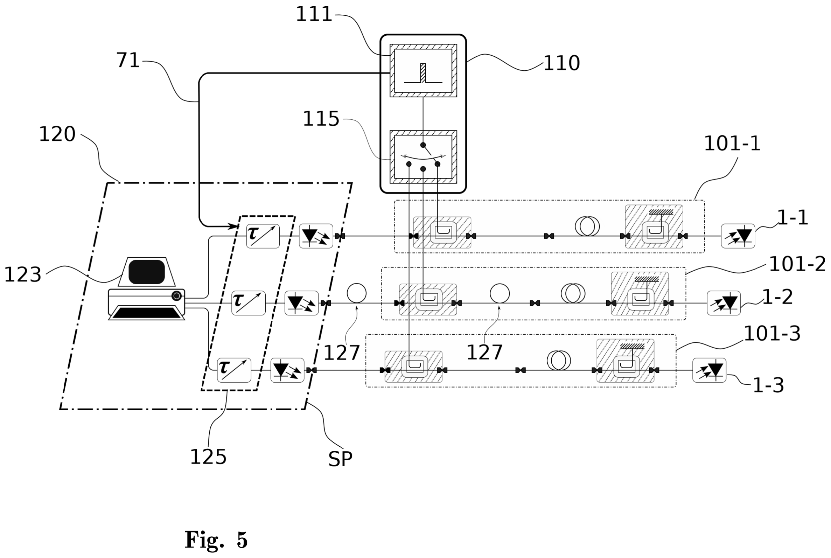

Fig. 5 shows a variant of the fiber based network 100 which additionally comprises a means to equalize, or balance, the delays over all of the branches 101-i.

The fiber based network 100, especially the server 120, may in particular comprise a time delay modification module 125 configured to (in particular automatically and regularly) modify the delay between the star point SP (i.e., of the start ports 121-i) and each of the end ports 199-i based at least on the respective delay measured by the central delay measurement device 110. The central delay measurement device 110 may be configured to transmit information signals or control signals 71 to the server 120, and especially to the time delay modification module 125.

For example, the time delay modification module 125 may be implemented as software on the server 120 and may be configured to adapt, and in particular equalize, the delays between the server 120 (i.e., the start ports 121-i) and each of the end ports 199-i for all data transmitted from, or to, a computing device 123 of the server. Such a software-implemented time delay modification module 125 may delay the inserting of data signals into, or processing of data signals from, any or each of the branches 101-i in order to adjust the delay.

The time delay modification module 125 may, for example, be initially configured to add a deliberate delay of x microseconds to any signal transmitted by the server 120 at any (or all) of the start ports 121-i into any (or all) of the branches 101-i. Then, in order to adapt, and in particular equalize, the delays between the server 120 and all of the end devices 1-i, each deliberate delay may be maintained, shortened, or lengthened, as required.

The deliberate delays may be zero at the start, so that over time the deliberate delays will be adapted such that the delay between the server 120 and all of the end devices 1-i is equal to the largest measured delay to any of the end devices 1-i. In other words, the signal for the end device 1-i with the highest measured delay (or: the highest measured delay to the reflective mirror of its reflecting unit 190-i) will have a deliberate delay of zero, and the signals for the other end devices 1-i will have a deliberate delay of zero or larger, as required for equilibration of the delays. In this way, both the primary priority - the provision of equal delays to all end devices 1-i - and the secondary priority - providing the signals with as little delay as possible - are both fulfilled. This may include the advantageous measure of reducing all delays by the minimum delay across all branches in case the delay is larger than zero in all branches.

In other variants, the time delay modification module may comprise a time delay modification unit 127 arranged at some, or each, of the branches 101-i, for example a time delay modification unit 127 realized partially or completely in hardware. Each of these time delay modification units 127 may receive a control signal from the central delay measurement device 110 instructing the time delay modification module to adjust (i.e., maintain, shorten, or lengthen) the corresponding delay to equalize (or: balance) the delays over all branches 101-i.

For example, such time delay modification units 127 may be realized to be tunable to realize delays in the optical domain or in the electrical domain. Electrical domain delays may be introduced by time delay modification units arranged between electrical-signal output ports of the computing device 123 and the electrical-to-optical signal couplers arranged at the start ports 121-i.

One or more time delay modification units 127 may be realized by a physical extension of the corresponding fiber for adding optical delays (i.e., delays in the optical domain), as is exemplarily depicted in Fig. 5.

The fiber based network 100 offers many advantages even apart from the option to automatically adjust the delays, for example the possibility to regularly or continuously monitor the delay times for each of the branches 101-i, for example to ensure that there are no alterations made by third parties to their, or their competitor's, branches 101-i. For example, in case of an unexpected change in delay (larger than a suitable chosen tolerance threshold), an automatic warning signal may be sent out by the central delay measurement device 110. The warning signal may be automatically sent to a regulating authority, to a provider of the server 120, and/or to the end devices 1-i.

Time periods between consecutive measurements of delays for one branch 101-i should be selected small enough so that realistically no alterations are possible in the meantime. In particular, a lengthening of the distance from a coupling point 191-i to the reflective mirror 195-i in order to fraudulently pretend an increased delay to the end port 199-i should be made impossible, as such would possibly cause a deliberate or automatic compensating reduction of delay, thus benefitting the fraudster. For example, a delay measurement for one and the same branch 101-i may be made every 1 second or less.

Additional measures may be taken to compensate for delays caused by natural or environmental reasons, in order to avoid triggering warning signals needlessly:

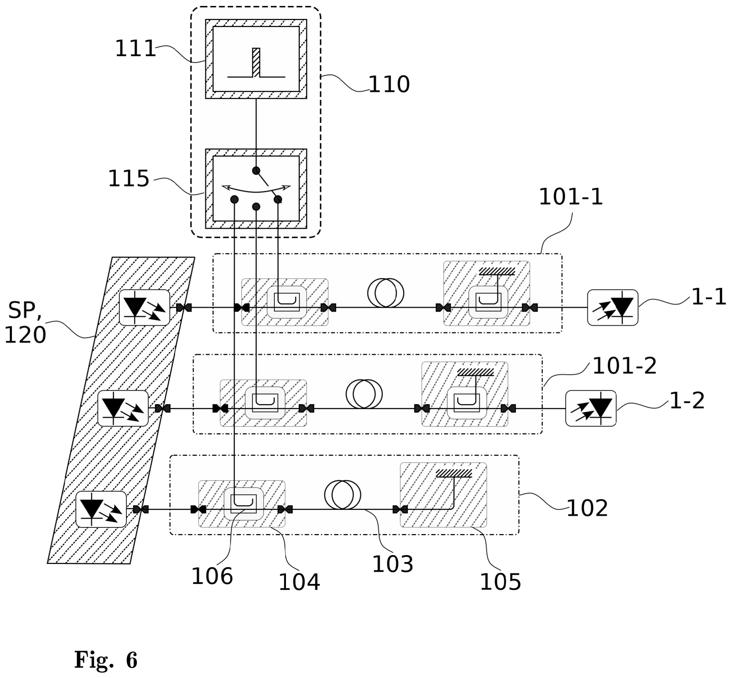

Fig. 6 illustrates an advantageous variant of the fiber based network 100 of Fig. 1, which additionally comprises a reference branch 102. The reference branch 102 has a reference fiber 103, into which a test signal can be coupled by a corresponding coupling unit 104, and which ends in its own reflective unit 105. The reference fiber 103 is preferably identical, or as closely identical as possible, to the network fibers of the branches 101-i, especially regarding its signal transportation properties and length. However, equal length is not a mandatory requirement for achieving the targeted functionality. In case the branches 101-i comprise two or more different types and/or lengths of network fibers, a corresponding number of two or more reference branches 102 with identical (or as close as possible) reference fibers 103 may be provided.

A reference delay between an inserting of a (reference) test signal into the reference branch 102 and a receiving of a reflected signal, generated by reflecting the test signal at the reflecting unit 105 of the reference branch 102 may be measured, for example, each time the delays for the branches 101-i are measured.

The reference delay may be used to compensate, for example, for changes in temperature or the like, in particular when the reference branch 102 is exposed to the same ambient conditions and/or installed within the same environment (e.g. the same building, the same room etc.) as the other branches 101-i. A conversion factor relating the actual fiber length of the fibers within the branches 101-i to the delay measured in each case can be regularly, or continuously, updated, even or especially under varying environmental conditions, using the measured reference delay, and the measured delays can thus be reliably converted into length information.

Ideally, the length of the reference fiber 103, at least between its insertion point 106 at the coupling unit 104 and the reflective mirror of the reflecting unit 105, is known with a high accuracy. The reference branch 102 should not be accessible by third parties, for example the owners of the end devices 1-i.

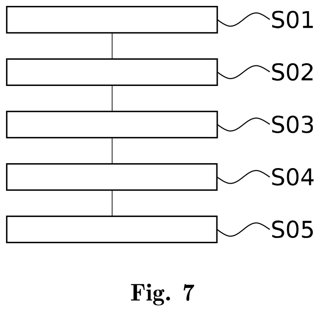

Fig. 7 shows a schematic flow diagram illustrating a method according to an embodiment of the first aspect of the present invention, i.e., a method for monitoring a fiber based network 100 with a star topology having a star point SP and branches 101-i connected thereto. The method of Fig. 7 may also be designated as a method of operating a fiber based network 100, or for calibrating a fiber based network 100.

In a step S01, at least one primary signal is generated as a basis for test signals TS-i to be distributed to the branches 101-i.

In a step S02, a respective test signal TS-i is sent into each of a plurality of the branches 101-i of the network 100, preferably into all of the branches 101-i, using a central delay measurement device 110, for example as has been described in the foregoing. The test signals TS-i may be the same as the primary signals generated in step S01, or may be based thereon, for example using time domain multiplexing, wavelength multiplexing and/or the like. Thus, the sending S02 of the test signals TS-i into the branches 101-i may comprise sequentially switching, multiplexing, and/or the like. For example, the primary signal may be wavelength-tuned, i.e., its wavelength may be changed sequentially, and then sent to different branches 101-i of the plurality of branches 101-i using wavelength division multiplexing.

In a step S03, a delay between the respective inserting S02 of the respective test signal TS-i and a receiving of a reflected signal RS-i for each of the plurality of branches 101-i is measured. The reflected signals RS-i are generated, at each branch 101-i of the plurality of branches 101-i, at a reflecting unit 190-i arranged at a respective end of said branch 101-i in parallel to, or in front of, an end port 199-i for connecting an end device 1-i to the fiber based network 100-i.

In a step S04, a delay of at least one of the plurality of branches 101-i is adjusted (in particular based on the delays measured in step S03), in particular to equalize the delay of all of the plurality of branches 101-i between the star point SP (in particular a server 120 acting as the star point SP) and the respective end port 199-i.

In an optional step S05, a reference delay may be measured using a reference branch 102 as has been described in the foregoing, and the reference delay may be used to compensate for ambient effects (e.g. due to temperature differences) on the branches 101-i by accounting for these effects during the adjusting S04 of the delays, in particular as has been described in the foregoing.

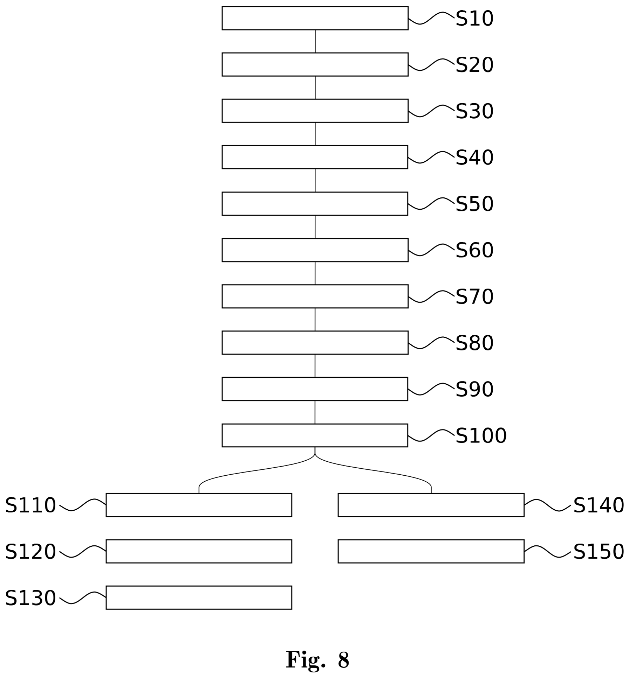

Fig. 8 shows a schematic flow diagram illustrating a method according to another embodiment of the present invention, i.e., a method for determining a delay between a start port 121-i (for connection to, e.g., a server 120) at a star point SP of a fiber based network 100 with a star topology, and an end port 199-i of one of the branches 101-i of the fiber based network 100, wherein said branch 101-i comprises an end port 199-i for connection to an end device 1-i. It shall be understood that the method may in particular be employ for determining delays for all branches 101-i arranged at the star point SP, for example for an initial adjustment before the fiber based network 100 is first put to use.

The method may be used with the fiber based network 100 according to embodiments of the present invention, or with other types of fiber based networks. The method of Fig. 8 may also be designated as a method of calibrating a fiber based network 100. The method of Fig. 8 may be a part of the method of Fig. 7, as part of an initial set-up for the fiber based network 100 being monitored using the method of Fig. 8.

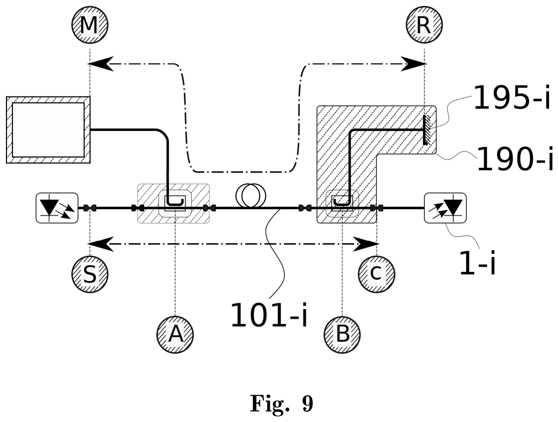

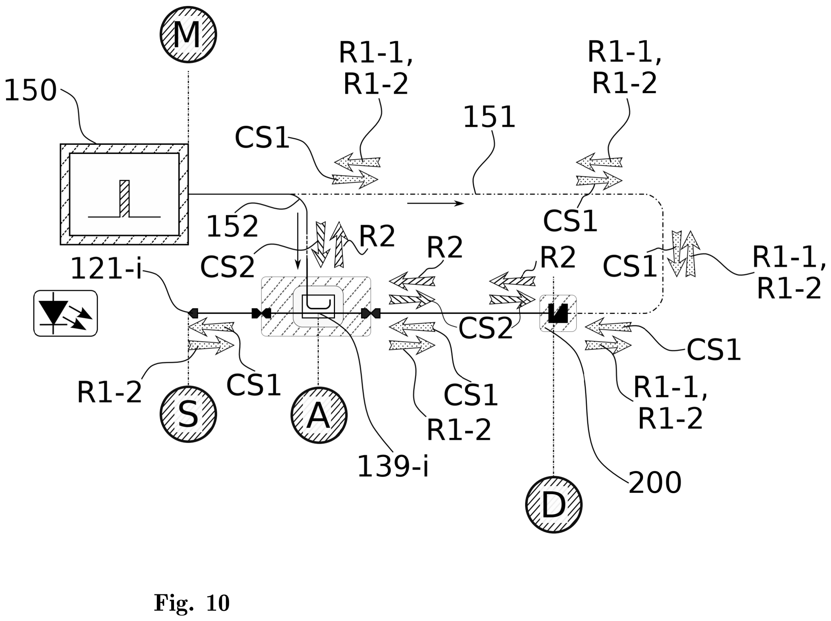

Fig. 9 and Fig. 10 show schematic diagrams illustrating the method of Fig. 8 and variants thereof; it shall be understood that some of the shown elements may be parts of a fiber based network 100 as shown in Fig. 1, Fig. 5, Fig. 6, or similar, for example during assembly of the fiber based network 100. In Fig. 9, some elements known from Fig. 1 are designated with different reference signs in order to simplify the following explanation of some calculations. Specifically, the reference signs A, B, C, D, M, R, and S designate physical locations. In the following, the notation [AB] will be used to designate a delay (or: signal transmission time) between the locations A and B, and analogously for the other locations.

Fig. 9 illustrates another technical challenge that is overcome by the present invention, in particular by the method of Fig. 8: in the fiber based network 100 and the method described in the foregoing with respect to Fig. 7, the delay [MR] is measured, wherein the reflecting unit 190-i is arranged and configured such that, approximately or exactly, [MR]=[MC]. Ideally, however, what is to be known is the delay [SC], which should then ideally be equalized for all end devices 1-i.

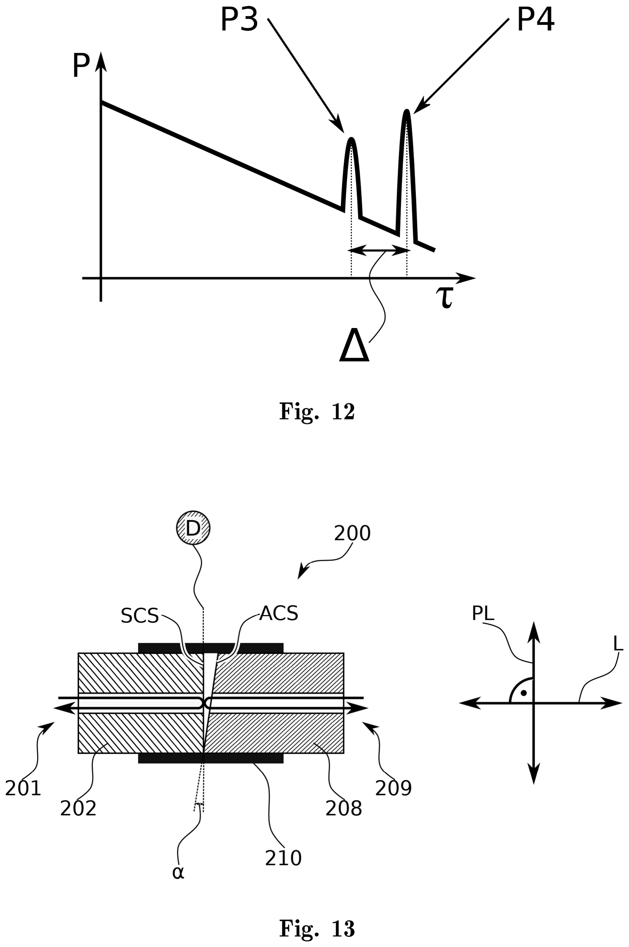

Returning to Fig. 8, in a step S10 of the method, a two-port bidirectional partially reflecting unit, TPBPRU 200, is connected with a first of its two ports to a branch 101-i, in a way such that this first port is facing the direction of the start port 121-i of the branch, for example at the end port 199-i of the branch 101-i. The TPBPRU 200 is configured to partially reflect signals entering it from both of its ports with the same delay at a location D (i.e., partially reflect them and partially transmit them). Some examples for implementations of such a TPBPRU 200 will be described later with respect to Figs. 13 through 15. The location D may be identical with the location C (see Fig. 9) at which, during operational use of the fiber based network 100, the end device 1-i is connected. However, location D is preferably closer to the star point SP.

In a step S20, a calibrating delay measurement device 150 is connected with (or: via) a calibration fiber 151 to a second of the two ports of the two-port bidirectional reflecting unit, TPBPRU 200. The calibrating delay measurement device 150 may be implemented as an optical time domain reflectometer, OTDR. It may be the same device as the central delay measurement device 110 of the fiber based network 100. In other variants, these may be two different devices; a main requirement for the calibrating delay measurement device 150 is its high measuring accuracy, whereas for the central delay measurement device 110 the main focus may be different, for example on frequent and fast measurements, on the handling of multi-wavelength signals, and so on. It may also be one and the same device, with two different operational modes, each optimized for either calibration or operational use, respectively.

In a step S30, a first calibration signal CS1 is generated at location M and inserted by the calibrating delay measurement device 150 into the calibration fiber 151, while the start port 121-i of the branch 101-i is unconnected.

The first calibration signal CS1 will reach and enter the second port of the two-port bidirectional reflecting unit, TPBPRU 200, then reach the reflecting location D of the two-port bidirectional reflecting unit 200. There, it will be partially reflected as a first reflection R1-1 of the first calibration signal CS1, and partially transmitted and emitted at the first port of the TPBPRU 200. From there, the (transmitted portion of the) first calibration signal CS1 reaches the unconnected (i.e., open) start port 121-i at the start port location S. Because the start port 121-i is open, the first calibration signal CS1 will be reflected there, generating (or becoming) a second reflection R1-2 of the first calibration signal CS1. The second reflection R1-2 will be partially transmitted at the TPBPRU 200 and thus eventually enter, via the calibration fiber 151, the calibrating delay measurement device 150. The first reflection R1-1 is thus indicative of the delay [MD] via the first calibration fiber 151, whereas the second reflection R1-2 is indicative of the delay [MS] via the first calibration fiber 151.

In a step S40, a delay between a receiving of the second reflection R1-2 of the first calibration signal CS1, generated at the unconnected start port 121-i at the start port location S, and a receiving of the first reflection R1-1 of the first calibration signal CS1, generated at the reflecting location D of the two-port bidirectional partially reflecting unit, TPBPRU 200, is determined. This delay is thus indicative of [SD] (or, equivalently, [DS]). Specifically, [SD] may be calculated as [SD]=[MS]-[MD], here both [MS] and [MD] being determined via the first calibration fiber 151.

The knowledge of [SD] is already quite useful, as it is in some configurations a close approximation to, or exactly the same as, [SC].

Optionally, additional steps for calibration may be performed, for example:
In a step S50, the calibrating delay measurement device 150 is connected, with (or: via) a second calibration fiber 152 to an insertion point 139-i of said branch 101-i, preferably closer to the start port 121-i than to the end port 199-i, in order to transmit signals in the direction of the end port 199-i with the still-attached two-port bidirectional partially reflecting unit, TPBPRU 200. The second calibration fiber 152 is preferably equal to, or identical with, the fiber with which the central delay measurement device 110 will be connected to the coupling unit 130-i and, specifically, the insertion points 139-i. The second calibration fiber 152 may also be equal to, or identical with, the first calibration fiber 151.

In a step S60, a second calibration signal CS2 is generated and inserted, by the calibrating delay measurement device 150, into the branch 101-i at the insertion point 139-i via the second calibration fiber 152.

In a step S70, a delay between the inserting S60 of the second calibration signal CS2 and a receiving of its reflection R2 at the reflecting location D of the two-port bi-directional partially reflecting unit, TPBDPRU 200, is measured, this delay being indicative of [MA]+[AD] (or: [MD] via the second calibration fiber 152).

In a step S80, a time difference ([MA]-[SA]) between delays between the start port 121-i and the insertion point 139-i at location A on one hand ([SA]), and the calibrating delay measurement device 150 and the insertion point 139-i on the other hand ([MA]) is determined.

For example, from the steps S10-S40 above, the delay [SD] is known, and from step S70, [MD] via the second calibration fiber 152 is known. Thus, the difference [MD]-[SD] gives a difference in delays between a signal transmitted from the server 120 to the end port 199-i, and a signal transmitted from the calibrating delay measurement device 150 via the second calibration fiber 152 to the end port 199-i. Since [AD] is fix, it follows that [MA]-[SA]=[MD]-[SD]

Since, during use of the fiber based network 100, all measurements will be done by the central delay measurement device 110 being fixed in place and coupled to the coupling units 130-i, this difference may be used for correcting delay measurement results in order to account for the actual delay to be equalized, i.e., the delay [SC] between the server 120 and each of the end devices 1-i. As has been mentioned before, during the operation of the fiber based network 100 in particular [MR] is measured (see Fig. 9). The above described steps allow compensating for delay differences between [MA], which is included in the determining of [MR], and [SA], which is part of [SC].

A further difference between the delay [MR] measurable, and measured, by the central delay measurement device 110, and the delay [SC] about which accurate knowledge is desired, is in the possible difference between the delay [BR], i.e. between the coupling point 191-i at location B and the reflective mirror 195-i of the reflecting unit 190-i at location R, and the delay [BC], i.e. between the coupling point 191-i and the end port 199-i at location C (see Fig. 9). Since it is desired for the fiber based network 100 that [BR]=[BC], and the reflecting unit 190-i should be configured and set up accordingly, the present invention also provides means to determine a possible difference between [BR] and [BC], in particular with the goal of eliminating it.

This may in particular be desirable if the coupling ratio of the couplers (used to couple fibers, e.g. at the coupling units 130-i at location A or the reflecting units 190-i at location C) is wavelength-dependent. The method may thus comprise further calibration steps. However, in principle, different options are available: The method may use identical wavelengths for all branches 101-i by selecting subsequently only one of the branches 101-i with an optical switch 115, or use different wavelengths for directing the calibration signal(s) CS1, CS2 to the different branches 101-i.

In the latter case, either the adjusted wavelength is configured to be able to pass only one of the coupling units 130-i, or the calibration (or: test) signal(s) CS1, CS2 is only reflected at the end of a single branch 101-i by the reflective mirror 195-i. Accordingly, in this variant the reflective mirrors 195-i of the various reflecting units 190-i will typically be configured differently from one another (in particular with respect to the wavelengths they reflect / do not reflect).

In the other variants, all of the reflecting units 190-i may instead be of the same configuration, in order to eliminate any differences in delay stemming from differences in the configuration. A mixture of these approaches is also possible, i.e. measuring the delays for two or more branches 101-i with calibration signals CS1, CS2 of the same wavelength, and measuring the delays for one or more branches 101-i with calibration signals CS1, CS2 of a different wavelength.

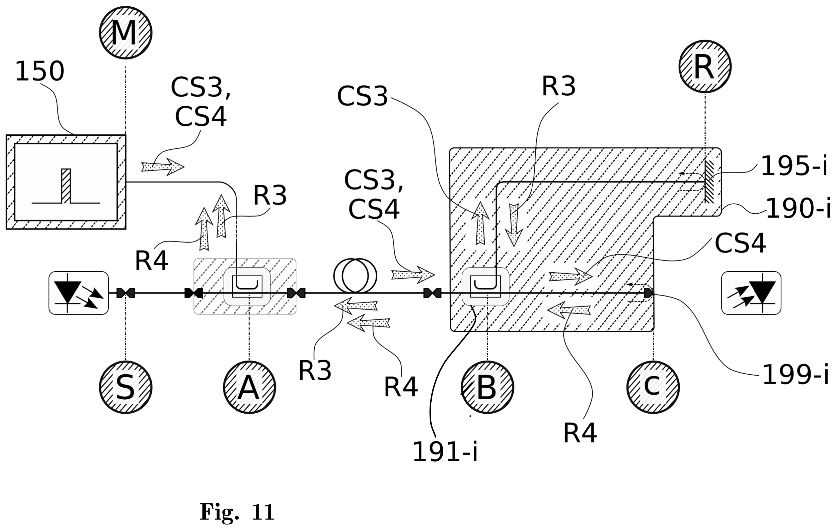

Fig. 11 shows parts of a fiber based network, in particular the fiber based network 100 of any of Fig. 1, Fig. 5, or Fig. 6, for the illustration of further calibration steps of the method of Fig. 8.

Returning to Fig. 8, in a step S90, the two-port bidirectional partially reflecting unit, TPBPRU 200, is - if present - removed from the branch 101-i, and the end port 199-i is left (or rendered) open (or: unconnected).

In a step S100, the reflecting unit 190-i is coupled to the branch 101-i with a connection to the fiber of the branch 101-i at the corresponding coupling point 191-i at location B.

In a step S110, a third calibration signal CS3 is generated and inserted, by the calibrating delay measurement device 150, into the branch 101-i at the insertion point 131-i at location A, wherein the third calibration signal CS3 consists of a first wavelength range configured such that the third calibration signal CS3 reaches the end port 199-i at location C but is not coupled out at the coupling point 191-i. This can be achieved, for example, by a wavelength-selectively outcoupling reflecting unit 190-i. Thus, a reflection signal R3 of the third calibration signal CS3 is generated at the open end port 199-i and received at the central delay measurement device 150.

In a step S120, a fourth calibration signal CS4 is generated and inserted, by the calibrating delay measurement device 150, into the branch 101-i at the insertion point 131-i at location A, wherein the fourth calibration signal CS4 consists of a second wavelength range configured such that the fourth calibration signal CS4 is completely coupled out of the branch 101-i at the coupling point 191-i and does (essentially) not reach the end point 199-i. Thus, a reflection signal R4 of the fourth calibration signal CS4 is generated at the reflective mirror 195-i of the coupling unit 190 and received at the central delay measurement device 150.

In a step S130, a time difference between the inserting S110 of the third calibration signal CS3 and the receiving of its reflection signal R3, and the inserting S120 of the fourth calibration signal CS4 and the receiving of its reflection signal R4 is determined, e.g. by mathematical subtraction at the central delay measurement device 150.

After any or all of these calibration steps have been performed, the fiber based network 100 may be arranged, installed, and initialized, e.g. as shown in Fig. 1, Fig. 5, or Fig. 6, wherein the information gained in the calibration steps may be used to adjust or correct any or all delay measurement results made during the operation of the fiber based network 100 and/or to adjust or correct the initial arrangement and installation of the fiber based network 100, for example by providing corresponding time delay modification units 127 in any or all of the branches 101-i.

As a variant to steps S110 through S130 of the embodiment described above, with two different calibration signals CS3, CS4 and a wavelength-selectively outcoupling reflecting unit 190-i, a reflecting unit 190-i which is not wavelength-selectively outcoupling may be used. In this case, in a step S140 only the (one) third calibration signal, CS3, may be fed into the branch 101-i, causing two reflections, one at the reflective mirror 195-i and one at the open port 199-i (which instead may also be coupled to a reflecting unit of negligible or known delay). The desired delay may then be calculated in a step S150 based on the time difference between the two reflections being received at the calibrating delay measurement device 150.

Fig. 12 shows a schematic graph, in which reflected power P is shown on a vertical axis, over a horizontal axis depicting delay τ. Visible therein are a first peak P3 stemming from the reflection signal R3 of the third calibration signal CS3 in the reflecting unit 190-i, and later, a second peak P4 stemming from the reflection signal R4 of the same calibration signal CS3 at the end port 199-i. The time difference Δ (or: delay difference) therebetween may be determined in step S150, and then used for compensating other delay measurement results.

Fig. 13 shows a schematic longitudinal cross-section of a two-port bidirectional partially reflecting unit, TPBPRU 200 according to another embodiment of the invention, which may, for example, be used in any method according to any embodiment of the present invention, e.g. in the method of Fig. 8.

The two-port bidirectional partially reflecting unit, TPBPRU 200, has a first port 201 and a second port 209. At the first port 201, a first fiber 202 ending in a straight connector surface SCS enters the TPBPRU 200, and at the second port 209, a second fiber 208 ending in an angled connector surface ACS enters the TPBPRU 200, the fiber ends held together by a longitudinal housing 210. The longitudinal housing 210 may have the form of a hollow cylinder.

The particular shape of a housing of the TPBPRU 200 or even the existence of such a housing is not essential, as long as the TPBPRU 200 comprises a volume in which the first fiber 202 and the second fiber 208 are aligned along a common longitudinal direction. Outside of this volume, the first fiber 202 and the second fiber 208 will typically no longer be arranged along the same axis.

In the example shown in Fig. 13, the straight connector surface SCS (or: first end surface) and the angled connector surface ACS (or: second end surface) face one another within the volume provided by the inside of the housing 210. A longitudinal direction of the first fiber 202 and a longitudinal direction of the second fiber 208 are, within the longitudinal housing 210, equal to a longitudinal direction L of the longitudinal housing 210, and thus also to each other. In other words, in the shown example, the longitudinal direction L of the longitudinal housing 210 provides and ensures the common longitudinal direction.

The straight connector surface SCS is arranged essentially in perpendicular to the longitudinal direction L of the housing 210, i.e., in a plane PL to which the longitudinal direction L of the housing 210 is perpendicular. The angled connector surface ACS is formed and arranged at an angle α with respect to the straight connector surface SCS, creating a wedge-form gap between the straight connector surface SCS and the angled connector surface ACS within the longitudinal housing 210.

Thus, the wedge-form gap (e.g., an air or vacuum gap) ensures that light signals entering at the first port 201 are reflected at the inside (with respect to the first fiber 202) of the straight connector surface SCS because of the change in the refractive index occurring behind it. The angle α is chosen such that (light) signals entering at the second port 209 are not reflected at the inside (with respect to the second fiber 209) of the angled connector surface ACS on which they impinge at an angle of 90°-α. These signals then pass the wedge-form gap and are then reflected by the outside of the straight connector surface SCS, then passing again through the angled connector surface ACS. In this way, signals entering the two-port bidirectional partially reflecting unit, TPBPRU 200, from both sides (i.e., at both ports 201, 209) are in each case reflected at the same location, i.e., the location D of the straight connector surface SCS.

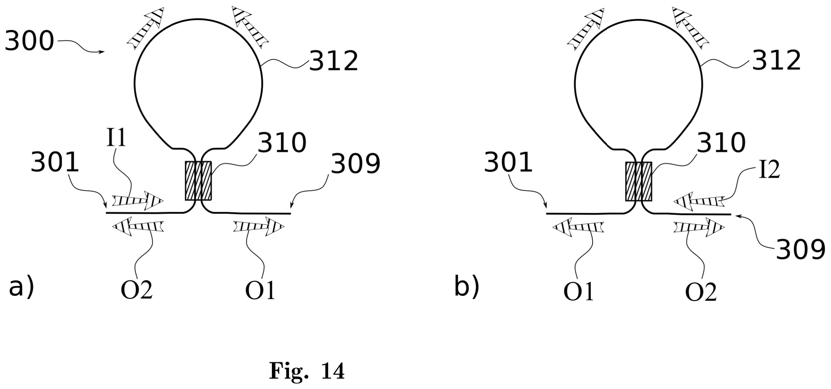

Fig. 14 illustrates another variant for implementing a two-port bidirectional partially reflecting unit, TPBPRU 300, based on a Sagnac type setup. The TPBPRU 300 is realized by a fiber being arranged with a loop 312, wherein an optical coupler 310 arranged at the base of the loop 312 couples signals I1, I2 incoming from either a first port 301 or a second port 309 into both ports connected to the loop 312. Fig. 14a) illustrates how a signal I1 incoming at the first port 301 leaves at both the first port 301 and the second port 309, as outgoing signals O1, O2. Fig. 14b) illustrates how a signal I2 incoming at the second port 309 also leaves at both the first port 301 and the second port 309, again as outgoing signals O2, O1. Both the originally incoming signal I1/O1, I2/O2, and the reflected (or, more specifically here: doubled) signal O2, O1 always travel along the entire length of the loop 312. Thus, effectively, signals I1, I2 incoming from both sides are reflected at the same location D.

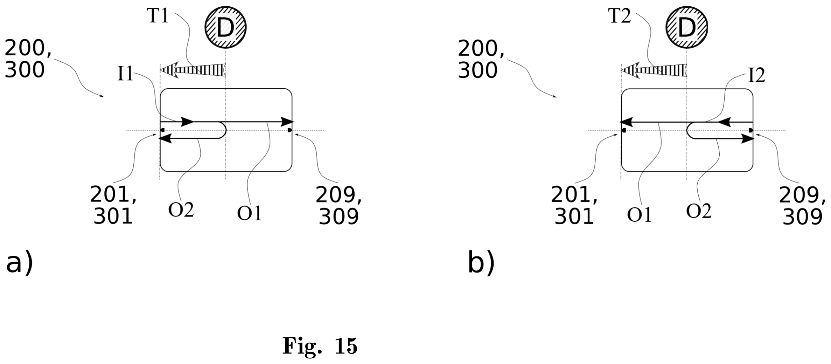

For clarity, Fig. 15 illustrates the requirement for equal delays for a TPBPRU 200, 300. Fig. 15a) illustrates how a signal I1 incoming at the first port 201, 301 leaves at both the first port 201, 301 and the second port 301, 309, as outgoing signals O1, O2. From the location of reflection D, the signal O2 reflected back to the input 201, 301 experiences a delay T1. In Fig. 15b), an incoming signal I2 is launched into the second port 209, 309, wherein a signal O2 is reflected back at location D to the second port 209, 309 and signal O1 propagates to the first port 201, 301. Propagation time of this signal O1 from the location of the reflection D to the first port 201, 301 amounts to the propagation delay T2. Mathematically, the requirement for equal delay means that the delays T1 and T2 amount to substantially the same value. Preferably, the magnitude of the difference of these delays is smaller than 100 ps, more preferably smaller than 10 ps, and even more preferably smaller than 1 ps.

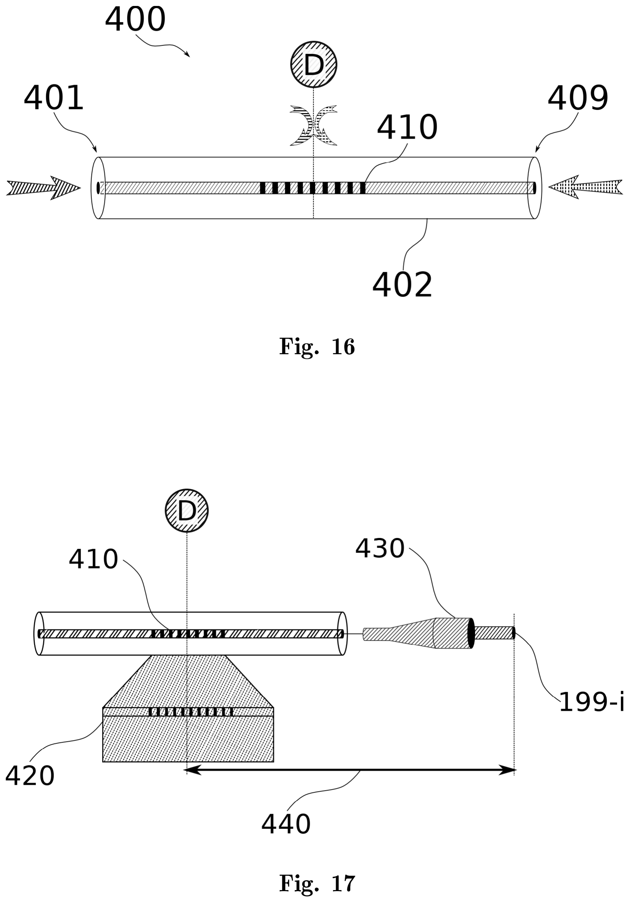

Fig. 16 illustrates yet another variant for implementing a two-port bidirectional partially reflecting unit, TPBPRU 400. The TPBPRU 400 is realized by a piece of fiber 402, wherein, between a first port 401 on one end and a second port 409 on another end, a Fiber Bragg Grating 410 has been formed. Such a TPBPRU 400 may in particular be used when the calibration signals CS1, CS2 (and/or test signals TS-i) and the data signal for data exchange during operation of the fiber based network 100 operate at disjunct (i.e., non-overlapping) wavelength ranges. Then, the Fiber Bragg Grating 410 may be configured such as to partially reflect the calibration signals CS1, C2 equally from both sides at the same effective location D at the symmetry center of the Fiber Bragg Grating 410, while letting the data signals pass (essentially) without reflections.

As illustrated in Fig. 17, the Fiber Bragg Grating 410 can be formed using an illuminating device 420 configured to selectively modify the optical properties of a fiber at precise spatial points thereof. Preferably, for especially accurate knowledge about the delay between the location of reflection D of the Fiber Bragg Grating 410 and the end port 199-i, a connector 430 forming the end port 199-i is first mounted onto the fiber, and then the illuminating device 420 is positioned accurately with respect to said connector 430 in order to form the Fiber Bragg Grating 410 with the connector 430 in place.

Before the Fiber Bragg Grating 410 is inscribed, or written, into the fiber, the illuminating device 420 can be positioned carefully and with a high degree of control of the required distance 440 from the connector 430 yielding exactly a given (or: desired) delay. Thus, the present invention also provides a method for producing a two-port bidirectional partially reflecting unit, TPBPRU, realized as a Fiber Bragg Grating 410.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

### List of Reference Signs

- 1-i: end device
- 71: control signal
- 100: fiber based network
- 101-i: branch of the fiber based network
- 102: reference branch
- 103: reference fiber
- 104: coupling unit
- 105: reflecting unit
- 106: insertion point
- 110: central delay measurement device
- 111: optical time domain reflectometer, OTDR
- 115: signal switching device
- 120: server
- 121-i: start port
- 123: computing device
- 125: time delay modification module
- 127: time delay modification unit
- 130-i: coupling unit
- 139-i: insertion point
- 150: calibrating delay measurement device
- 151: first calibration fiber
- 152: second calibration fiber
- 190-i: reflecting unit
- 191-i: coupling point
- 195-i: reflective mirror
- 199-i: end port
- 200: two-port bidirectional partially reflecting unit, TPBPRU
- 201: first port
- 202: first fiber
- 208: second fiber
- 209: second port
- 210: longitudinal housing
- 300: two-port bidirectional partially reflecting unit, TPBPRU
- 301: first port
- 309: second port
- 310: optical coupler
- 312: loop
- 400: two-port bidirectional partially reflecting unit, TPBPRU
- 402: fiber
- 401: first port
- 409: second port
- 410: Fiber Bragg Grating
- 420: illuminating device
- 430: connector
- 440: distance

- A: location of fiber coupling at the coupling unit
- ACS: angled connector surface
- B: location of fiber coupling at the reflecting unit
- C: location of the end port
- CS1: first calibration signal
- CS2: second calibration signal
- CS3: third calibration signal
- CS4: fourth calibration signal
- D: location of reflection of the two-port bidirectional partially reflecting unit, TPBPRU
- I1: signal incoming at first port
- I2: signal incoming at second port
- L: longitudinal direction
- M: location of the calibrating delay measurement device
- O1: signal outgoing at second port
- O2: signal outgoing at first pot
- P: power
- PL: plane
- P3: first peak, of the third calibration signal
- P4: second peak, of the third calibration signal
- R: location of reflection of the reflecting unit
- R1-1: first reflection of the first calibration signal
- R1-2: second reflection of the first calibration signal
- R3: reflection of the third calibration signal
- R4: reflection of the fourth calibration signal
- RS-i: reflected signal
- S: location of the start port
- SCS: straight connector surface
- SP: star point
- T1: delay of back reflected signal O2 from location D to the first port 201, 203
- T2: delay of the forward propagating signal O1 from location D to the first port 201, 203
- TS-i: test signal
- α: angle of wedge-form gap
- Δ: time difference
- S01..S150: method steps

## Claims

1. A method for determining a delay between a start port (121-i) at a star point (SP) of a fiber based network (100) with a star topology and an end port (199-i) of one of the branches (101-i) of the fiber based network (100), wherein said branch (101-i) comprises a start port (121-i) for connection to the star point (SP) and an end port (199-i) for connection to an end device (1-i), the method comprising at least the steps of:
connecting (S10) a two-port bidirectional partially reflecting unit, TPBPRU (200; 300; 400), with a first port (201; 301; 401) of its two ports (201, 209; 301, 309; 401, 409) to said branch (101-i) facing the direction of the start port (121-i), wherein the two-port bidirectional partially reflecting unit, TPBPRU (200; 400; 500), is configured to partially reflect signals (CS1) entering it from both of its two ports (201, 209; 301, 309; 401, 409) with the same delay;
connecting (S20) a calibrating delay measurement device (150) with a first calibration fiber (151) to a second port (209; 309; 409) of the two ports (201, 209; 301, 309; 401, 409) of the two-port bidirectional partially reflecting unit, TPBPRU (200);
generating (S30) a first calibration signal (CS1) and inserting it into the first calibration fiber (151), by the calibrating delay measurement device (150), while the start port (121-i) of the branch (101-i) is unconnected or connected to a reflective device with negligible delay or known delay from the start port (121-i) to a location of reflection of the reflective device; and
determining (S40) a delay between a receiving of a first reflection (R1-1) of the first calibration signal (CS1), generated at the two-port bidirectional partially reflecting unit, TPBPRU (200; 300; 400), and a receiving of a second reflection (R1-2) of the first calibration signal (CS1), generated at the unconnected start port (121-i) or at the reflective device, respectively.

2. The method of claim 1, further comprising steps of:
connecting (S50) the calibrating delay measurement device (150) with a second calibration fiber (151, 152) to an insertion point (139-i) of said branch (101-i);
generating (S60) a second calibration signal (CS2) and inserting it into the branch (101-i) at the insertion point (139-i) via the second calibration fiber (151, 152);
measuring (S70) a delay between the inserting (S60) of the second calibration (CS2) signal and a receiving of its reflection (R2) at the two-port bi-directional partially reflecting unit, TPBPRU (200; 300; 400); and
determining (S80) a time difference between delays between the start port (121-i) and the insertion point (131-i) on one hand, and the calibrating delay measurement device (150) and the insertion point (131-i) on the other hand.

3. The method of claim 1 or claim 2, further comprising steps of:
coupling (S100) a reflecting unit (190-i) to the branch (101-i) with a connection to the fiber of the branch (101-i) at a corresponding coupling point (191-i), while the end port (199-i) of the branch (101-i) is unconnected;
generating and inserting (S110, S120) at least a third calibration signal (CS3, CS4), by the calibrating delay measurement device (150), into the branch (101-i) at an insertion point (131-i); and
determining (S130) a time difference between the inserting (S110) of one of the at least one third calibration signal (CS3, CS4) and a receiving of a corresponding reflection from the unconnected end port (199-i) or end port (199-i) coupled to a reflecting unit of negligible or known delay and the inserting (S120) of one of the at least one third calibration signal (CS3, CS4) and a receiving of a corresponding reflection from the reflecting unit (190-i), in particular from a reflective mirror (195-i) of the reflecting unit (190-i).

4. The method of claim 3,
wherein the at least one third calibration signal (CS3, CS4) includes a third calibration signal (CS3) and a fourth calibration signal (CS4);
wherein the third calibration signal (CS3) consists of a first wavelength range configured such that the third calibration signal (CS3) reaches the end port (199-i) but is not coupled out at the coupling point (191-i); the method comprising:
generating and inserting (S110) the fourth calibration signal (CS4), by the calibrating delay measurement device (150), into the branch (101-i) at the insertion point (131-i),
wherein the fourth calibration signal (CS4) consists of a second wavelength range configured such that the fourth calibration signal (CS4) is completely coupled out of the branch (101-i) at the coupling point (191-i); and
the determining (S130) comprises determining a time difference between the inserting (S110) of the third calibration signal (CS3) and a receiving of its reflection signal (R3) from the unconnected end port (199-i) or end port (199-i) coupled to the reflecting unit of negligible or known delay, and the inserting (S120) of the fourth calibration signal (CS4) and a receiving of its reflection signal (R4) from the reflecting unit (190-i).

5. The method of claim 4, wherein a wavelength-selectively-outcoupling reflecting unit is used as the reflecting unit (190-i).

6. The method of claim 3, comprising:
feeding (S140) the third calibration signal (CS3) into the branch (101-i), causing two reflections, one of the two at the reflective mirror (195-i) of the reflecting unit (190-i) and another one of the two at the unconnected end port (199-i) or end port (199-i) coupled to the reflecting unit of negligible or known delay; and
calculating (S150) the delay to be determined based on the time difference between said two reflections being received at the calibrating delay measurement device (150).

7. A two-port bidirectional partially reflecting unit,
TPBPRU (200), for a fiber based network (100), comprising:
a first end surface (SCS) of a first fiber (202) and a second end surface (ACS) of a second fiber (208) facing one another, wherein the first fiber (202) and the second fiber (208) are aligned along a common longitudinal direction (L) in the volume in which the first end surface (SCS) and the second end surface (ACS) are arranged;
wherein the first end surface (SCS) is arranged essentially in perpendicular to the longitudinal direction (L); and
wherein the second end surface (ACS) is formed and arranged at an angle (α) with respect to the first end surface (SCS), creating a wedge-form gap between the first end surface (SCS) and the second end surface (ACS).

8. The two-port bidirectional partially reflecting unit, TPBPRU (200), of claim 7 for the use in the method of any of claims 1 to 6.
